# EUROPÄISCHE PATENTANMELDUNG

(11) **EP 3 373 040 A1**
(43) Veröffentlichungstag der Anmeldung: **12.09.2018**
(21) Anmeldenummer: 18158503.5
(22) Anmeldetag: 26.02.2018
(51) Int. Cl.: G01S 17/93, G01S 15/93, G01S 7/40, G01S 7/497, G01S 7/52, G01S 13/93

(54) **KALIBRIERVERFAHREN ZUR KALIBRIERUNG VON UMGEBUNGSSENSOREN EINER FAHRZEUG-UMGEBUNGSSENSORIK IN DER FAHRZEUGPRODUKTION SOWIE PRÜFANLAGE UND FAHRZEUG ZUR DURCHFÜHRUNG DES VERFAHRENS**

(30) Priorität: 07.03.2017 DE 102017002195
(71) Anmelder: MAN Truck & Bus AG, 80995 München (DE)
(72) Erfinder: Körner, Tobias, 85757 Karlsfeld (DE)
(74) Vertreter: v. Bezold & Partner Patentanwälte - PartG mbB

(57) **Zusammenfassung**

Die Erfindung betrifft ein Kalibrierverfahren zur Kalibrierung wenigstens eines Umgebungssensors (6) einer Fahrzeug-Umgebungssensorik in der Fahrzeugproduktion, mit den Verfahrensschritten: ein Fahrzeug (1) mit dem wenigstens einen ortsfest am Fahrzeug (1) montierten Umgebungssensor (6) wird in ein Messfeld (10) einer Prüfstation eingestellt, wobei die Prüfstation eine Prüfanlage mit einer steuerbaren Prüfeinrichtung für die Erfassung der Relativposition zwischen dem wenigstens einen Umgebungssensor (6) und einem zugeordneten Zielobjekt (9) aufweist. Die Prüfeinrichtung sowie eine fahrzeugseitige Sensorik-Steuereinheit mit Kalibrierfunktion der fahrzeugseitigen Umgebungssensorik werden aktiviert. Das erfindungsgemäße Kalibrierverfahren ist weiter gekennzeichnet durch die Verfahrensschritte: Die Prüfeinrichtung weist wenigstens ein ortsfestes Zielobjekt (9) im Messfeldraum und im Sichtfeld des wenigstens einen Umgebungssensors (6) auf, dessen genaue räumliche, ortsfeste Zielobjektposition (X2, Y2, Z2) als Referenzpunkt mit seinen Zielpositionsdaten in der Prüfeinrichtung gespeichert ist. Von der Prüfeinrichtung wird unmittelbar oder mittelbar die Relativposition zwischen der Zielobjektposition (X2, Y2, Z2) und der Position (x2, y2, z2) des wenigstens einen Umgebungssensors (6) als Vergleichs-Relativposition erfasst und daraus erstellte Kalibrier-Positionsdaten werden der Sensorik-Steuereinheit übermittelt. Zudem wird von der Umgebungssensorik mittels des wenigstens einen Umgebungssensors (6) und der Sensorik-Steuereinheit ebenfalls die Relativposition zwischen dem zugeordneten ortsfesten Zielobjekt (x1, y1, z1) und Umgebungssensor (x2, y2, z2) erfasst und entsprechend ermittelte Sensorik-Positionsdaten werden mit den übermittelten Kalibrier-Positionsdaten im Zuge der Kalibrierung in der Sensorik-Steuereinheit abgeglichen.

## Beschreibung

Die Erfindung betrifft ein Kalibrierverfahren zur Kalibrierung wenigstens eines Umgebungssensors einer Fahrzeug-Umgebungssensorik in der Fahrzeugproduktion nach dem Oberbegriff des Patentanspruches 1, eine Prüfanlage zur Durchführung des Kalibrierverfahrens nach Patentanspruch 7 sowie ein Fahrzeug, insbesondere ein Nutzfahrzeug, zur Durchführung des Kalibrierverfahrens nach Patentanspruch 8.

Eine Fahrzeug-Umgebungssensorik wird, insbesondere in Verbindung mit Assistenzsystemen eines Fahrzeugs, beispielsweise einem Abbiegeassistent, verwendet. Eine solche Umgebungssensorik weist wenigstens einen Umgebungssensor, regelmäßig mehrere Umgebungssensoren an unterschiedlichen Fahrzeugaußenseiten, sowie eine Sensorik-Steuereinheit auf. Als Umgebungssensoren werden je nach den Gegebenheiten optische-, LIDAR-, Radar- und Ultraschallsensoren verwendet mit entsprechender Sensoriktechnologie, die auf Ultraschall-, LIDAR-, Radar- oder Bildverarbeitungstechnologie basiert.

Solche Umgebungssensoren werden an Fahrzeugen, beispielsweise an Nutzfahrzeugen, an vorbestimmten Sensorpositionen montiert, wodurch grundsätzlich die Funktion der entsprechenden Sensorik in Verbindung mit der Sensorik-Steuereinheit bereits gegeben ist. Bedingt durch Einbautoleranzen und Funktionstoleranzen der Sensoren kann die Umgebungssensorik gegebenenfalls ungenaue Werte liefern mit ungünstigen Einflüssen auf damit betriebene Systeme, insbesondere Assistenzsysteme. Daher werden aktuell Umgebungssensoren mit der zugeordneten Sensorik-Steuereinheit in Prüfungsstationen im Verlauf der Fahrzeugproduktion zur Verbesserung der Genauigkeit kalibriert.

Dazu wird aktuell bei einem allgemein bekannten, gattungsgemäßen Kalibrierverfahren ein Fahrzeug mit wenigstens einem ortsfest am Fahrzeug montierten Umgebungssensor in ein Messfeld einer Prüfstation eingestellt, wobei die Prüfstation eine Prüfanlage mit einer steuerbaren Prüfeinrichtung für die hochgenaue Erfassung der Relativposition zwischen dem Umgebungssensor und einem diesem zugeordneten Zielobjekt aufweist.

Zum Start des Kalibriervorgangs werden sowohl die Prüfeinrichtung als auch eine Umgebungssensorik mit einer fahrzeugseitigen Sensor-Steuereinheit mit Kalibrierfunktion aktiviert. Von der Prüfeinrichtung wird nun die genaue Position und Ausrichtung des Fahrzeugs im Messfeld vermessen, beispielsweise durch auf die Fahrzeugachsen aufgesteckte Sensoren, deren Lage von der Prüfeinrichtung erfasst werden können. Je nachdem wie ein Fahrzeug in das Messfeld eingestellt wird, ändern sich für jede Kalibrierung die entsprechenden fahrzeugseitigen Daten.

Bei diesem allgemein bekannten Kalibrierverfahren sind die Zielobjekte gesteuert verlagerbar und werden bei jedem Kalibriervorgang von der Prüfeinrichtung in eine jeweils gleiche, genau vorgegebene Relativposition zum zugeordneten Umgebungssensor bewegt. Diese Zielobjektposition wird von der Prüfeinrichtung mit den entsprechenden Positionsdaten der Sensorik-Steuereinheit mitgeteilt, die ihrerseits ebenfalls die angefahrene Zielobjektposition erfasst. Im Zuge der Kalibrierung werden dann die von der Sensorik ermittelten Positionsdaten mit dem von der Prüfeinrichtung der Sensorik-Steuereinheit übermittelten Positionsdaten als Kalibrierpositionsdaten in der Sensorik-Steuereinheit abgeglichen. Nach erfolgreicher Kalibrierung wird das Ergebnis positiv von der Sensorik-Steuereinheit quittiert. Damit wird eine hochgenaue Kalibrierung der Umgebungssensorik bezogen auf eine eingestellte Zielobjektposition durchgeführt und es kann davon ausgegangen werden, dass die Umgebungssensorik auch bezüglich anderer, später betriebsmäßig erfasster Zielobjektpositionen genau funktioniert.

Ersichtlich ist der Kalibrierprozess nach dem Stand der Technik durch die erforderliche genaue Verlagerung der Zielobjekte durch bewegliche Teile mechanisch und auch zeitlich aufwendig. Zudem ist der Platzbedarf relativ groß und durch die Bewegungsabläufe können gegebenenfalls auch Mitarbeiter beeinträchtigt werden.

Aufgabe der Erfindung ist es, ein gattungsgemäßes Kalibrierverfahren sowie eine Prüfanlage und ein Fahrzeug zur Durchführung des Kalibrierverfahrens vorzuschlagen, mit dem die Kalibrierung einer Fahrzeug-Umgebungssensorik in der Fahrzeugproduktion vereinfacht wird.

Diese Aufgabe wird gelöst mit den Merkmalen der unabhängigen Patentansprüche. Bevorzugte Weiterbildungen sind in den Unteransprüchen offenbart.

Gemäß Anspruch 1 wird beim beanspruchten Kalibrierverfahren ebenso wie bisher ein Fahrzeug mit dem wenigstens einen ortsfest am Fahrzeug montierten Umgebungssensor in ein Messfeld einer Prüfstation bei der Fahrzeugproduktion eingestellt. Die Prüfstation weist eine Prüfanlage mit einer steuerbaren Prüfeinrichtung für eine hochgenaue Erfassung der Relativposition zwischen dem wenigstens einen Umgebungssensor und einem zugeordneten Zielobjekt auf. Zum Start des Kalibrierverfahrens werden eine fahrzeugseitige Sensorik-Steuereinheit mit Kalibrierfunktion sowie die Prüfeinrichtung aktiviert.

Im Gegensatz zum Stand der Technik weist jedoch die erfindungsgemäße Prüfeinrichtung wenigstens ein ortsfestes Zielobjekt im Messfeldraum auf, welches im Sichtfeld des wenigstens einen Umgebungssensors liegt. Bei mehreren zu kalibrierenden Umgebungssensoren kann diesen in Abhängigkeit der geometrischen Gegebenheit jeweils ein ortsfestes Zielobjekt oder jedem Umgebungssensor ein eigenes ortsfestes Zielobjekt zugeordnet sein. Die genaue räumliche ortsfeste Zielobjektposition eines Zielobjekt ist in jedem Fall als Referenzpunkt mit seinen Zielpositionsdaten, insbesondere als Koordinaten eines kartesischen Koordinatensystems oder polaren Koordinatensystems, in der Prüfungseinrichtung gespeichert. Zur Kalibrierung wird nun unmittelbar oder mittelbar die genaue Relativposition zwischen der Zielobjektposition und einem zugeordneten Umgebungssensor als Vergleichs-Relativposition erfasst und die entsprechenden erstellten Relativpositionsdaten werden als Kalibrier-Positionsdaten der Sensorsteuereinheit übermittelt. Diese Kalibrier-Positionsdaten sind insbesondere Daten über die räumliche Position sowie die Ausrichtung des Umgebungssensors im Messfeld. Zudem können auch noch weitere Daten, beispielsweise die Charakteristik des zu bewertenden Signals, die Signalgeschwindigkeit oder die Position des zu kalibrierenden Sensors am Fahrzeug (rechts/links), als Kalibrierdaten an die Sensor-Steuereinheit übermittelt werden.

Zudem wird von der Umgebungssensorik mittels des zu kalibrierenden Umgebungssensors und der Umgebungs-Steuereinheit ebenfalls die Relativposition zwischen dem zugeordneten ortsfesten Zielobjekt und dem Umgebungssensor erfasst und die entsprechend ermittelten Sensorpositionsdaten werden mit den von der Prüfeinrichtung der Sensorik-Steuereinheit übermittelten Kalibrier-Positionsdaten im Zuge der Kalibrierung in der Sensorik-Steuereinheit abgeglichen. Nach Beendigung der Kalibrierung wird dies von der Sensorik-Steuereinheit positiv quittiert.

Das vorstehende Kalibrierverfahren kann für mehrere am Fahrzeug montierte Umgebungssensoren nacheinander oder gegebenenfalls auch gleichzeitig durchgeführt werden.

Mit anderen Worten besteht der Unterschied des beanspruchten Kalibrier-Verfahrens zum Stand der Technik darin, dass ein Zielobjekt ortsfest und unabhängig von der räumlichen Position eines in einem Messfeld einer Prüfstation eingebrachten Fahrzeugs, insbesondere unabhängig von der Lage der Fahrzeugachsen, der Fahrachse und der Sensorikposition im Messfeldraum fixiert ist. Die Prüfeinrichtung ermittelt ebenso wie bei bisherigen Kalibriersystemen und Kalibrierverfahren die Position und damit die Positionsdaten des Fahrzeugs im Messfeld. Anstatt aber nun das Zielobjekt in Abhängigkeit der ermittelten Positionsdaten auf das Fahrzeug hin auszurichten und entsprechend zu verlagern, übermittelt die Prüfeinrichtung der Sensorik-Steuereinheit die Relativpositionsdaten des ortsfest fixierten Zielobjekts, worauf eine Kalibrierung in der Sensorik-Steuereinheit durchgeführt wird.

Vorteilhaft können erfindungsgemäß bewegliche Teile zur Ausrichtung eines oder mehrerer Zielobjekte im Messfeldbereich entfallen. Dadurch kann die Prüfanlage insgesamt kostengünstiger bei reduziertem Platzbedarf hergestellt werden. Zudem können Rüstzeiten für die Kalibrierung verkürzt und durch eine beschleunigte Kalibrierung der Produktionsprozess insgesamt beschleunigt werden. Ebenso entfällt eine mögliche Gefährdung von Mitarbeitern durch automatisiert bewegte Zielobjekte, da der erfindungsgemäße Kalibrierprozess ohne Zielobjektbewegung und damit ohne mögliche Mitarbeiterinteraktion erfolgt.

Je nach Ausführung des zu kalibrierenden Umgebungssensors und des zugeordneten ortsfesten Zielobjekts können bei einer unmittelbaren direkten Kommunikation die genaue Relativposition bzw. die Vergleichs-Relativposition und damit die Kalibrierdaten direkt erfasst und erstellt werden.

Je nach den Gegebenheiten kann es aber einfacher sein, wenn die Prüfeinrichtung eine genaue Referenzposition zwischen dem Zielobjekt und wenigstens einem definierten Fahrzeugpunkt erfasst. Eine solche erfasste Referenzposition kann vorteilhaft auch für mehrere zu kalibrierende Umgebungssensoren, unabhängig von deren Art und Funktion zur Kalibrierung, verwendet werden. Die genaue Relativposition bzw. die Vergleichs-Relativposition zwischen Zielobjekt und Umgebungssensor und damit die Kalibrier-Positionsdaten können einfach durch eine vektorielle Addition der ermittelten Referenzposition und einer durch die Einbauposition des Umgebungssensors am Fahrzeug der Sensor-Steuereinheit genau bekannten, insbesondere abgespeicherten, Position in der Sensorik-Steuereinheit und/oder gegebenenfalls in der Prüfeinrichtung berechnet werden. Ein oder mehrere solcher definierter, von Umgebungssensoren beabstandete Fahrzeugpunkte können insbesondere durch Positionssensoren vorbestimmt werden, die auf vorgegebene Achspunkte aufgesetzt werden und deren Position von der Prüfeinrichtung genau feststellbar ist.

Für die Berechnung wird vorteilhaft der Prüfanlage bzw. im Messfeld ein für die Erfassung von Relativpositionen durch die Prüfeinrichtung zugeordnetes, ortsfestes Prüfanlagen-Koordinatensystem zugeordnet. Dem Fahrzeug wird ein dagegen fahrzeugfestes Fahrzeug-Koordinatensystem zugeordnet. Die Koordinatensysteme können insbesondere kartesische Koordinatensysteme oder polare Koordinatensysteme sein. Die Prüfeinrichtung kann die Fahrzeugposition, insbesondere unter Einbeziehung wenigstens eines definierten Fahrzeugpunkts, dergestalt kalibrieren, dass das Fahrzeugkoordinatensystem im Prüfanlagen-Koordinatensystem abgebildet wird.

Zweckmäßig werden mehrere definierte Fahrzeugpunkte mittels Positionssensoren gebildet, die an vorbestimmten Kalibrierstellen am Fahrzeug, insbesondere an den Fahrzeugachsen, aufgesteckt werden. Durch Einbeziehung mehrerer solcher Kalibrierstellen können sowohl die Position als auch die Ausrichtung des Fahrzeugs und damit auch eines zu kalibrierenden Umgebungssensors hochgenau von der Prüfeinrichtung erfasst und kalibriert werden.

Konkret können ein oder mehrere Umgebungssensoren als optische Sensoren oder LIDAR-Sensoren oder Radar-Sensoren oder Ultraschall-Sensoren am Fahrzeug eingesetzt sein gegebenenfalls für mehrere der Umgebungssensoren jeweils wenigstens ein ortsfest zugeordnetes Zielobjekt im Messfeldraum und jeweiligen Sensorsichtfeld vorgesehen sein. Dabei kann das wenigstens eine Zielobjekt als aktives Ziel, insbesondere mit Sendefunktion und/oder als inaktives Ziel, insbesondere mit Reflektorfunktion, beispielsweise als Drehspiegel, ausgebildet sein.

Die Kommunikation zwischen der Prüfeinrichtung und der Sensorik-Steuereinheit, insbesondere zur Übermittlung der Kalibrier-Positionsdaten, kann grundsätzlich über eine steckbare Kabelverbindung erfolgen. Vorteilhaft kann die Kommunikation, insbesondere die Übermittlung von Kalibrierpositionsdaten, aber drahtlos per Funk erfolgen.

Bezüglich einer Prüfanlage zur Durchführung des erfindungsgemäßen Kalibrierverfahrens ist wesentlich, dass die Prüfanlage wenigstens ein ortsfestes Zielobjekt im Messfeld aufweist. Dieses ortsfeste Zielobjekt ist unabhängig zur räumlichen Position eines in die Prüfanlage eingebrachten Fahrzeugs in der Prüfanlage fixiert.

Weiter wird ein Fahrzeug, insbesondere ein Nutzfahrzeug, beansprucht mit wenigstens einem ortsfest am Fahrzeug montierten Umgebungssensor und einer zugeordneten Sensorik-Steuereinheit mit Kalibrierfunktion zur Durchführung des erfindungsgemäßen Kalibrierverfahrens.

Anhand einer Zeichnung wird die Erfindung weiter erläutert.

Es zeigen:
- Figur 1: eine stark schematisierte Draufsicht auf ein Fahrzeug im Messfeld einer Prüfstation während eines Kalibrierverfahrens zur Kalibrierung eines Umgebungssensors einer Fahrzeug-Umgebungssensorik in der Fahrzeugproduktion; und
- Figur 2: eine der Figur 1 entsprechende Heckansicht.

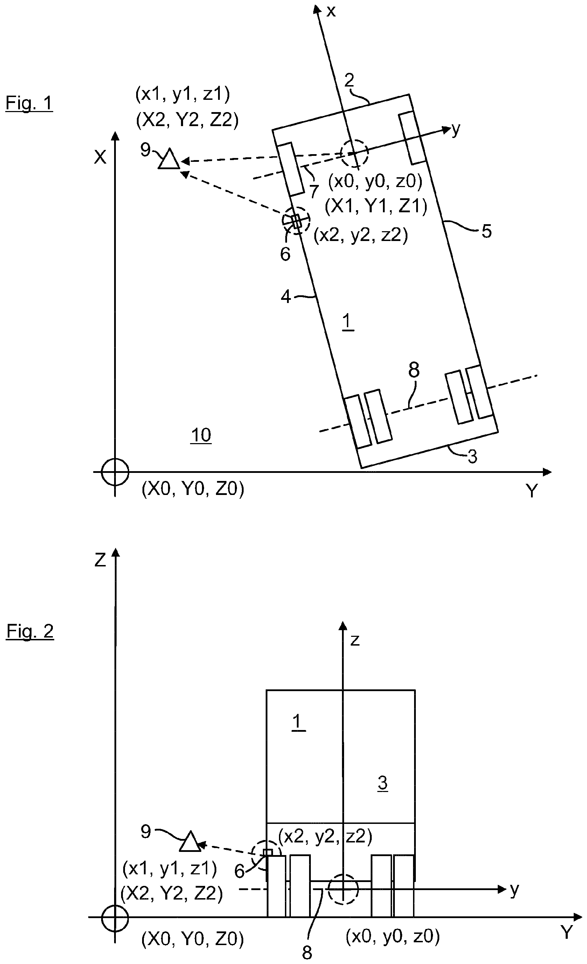

In den Figuren 1 und 2 ist schematisch ein Fahrzeug 1 dargestellt mit einer Frontseite 2, einer Heckseite 3, einer linken Fahrzeugseite 4 und einer rechten Fahrzeugseite 5.

Schematisch und beispielhaft ist hier die Kalibrierung eines Umgebungssensors 6 dargestellt, der an der linken Fahrzeugseite 4 ortsfest am Fahrzeug 1 angeordnet ist und der Bestandteil einer fahrzeugseitigen Umgebungssensorik mit weiteren (nicht dargestellten) Umgebungssensoren sowie einer fahrzeugseitigen Sensorik-Steuereinheit mit Kalibrierfunktion ist.

Dem Fahrzeug 1 ist ein kartesischen Koordinatensystem zugeordnet, das einen Ursprung (x0, y0, z0) im Mittelpunkt einer Vorderachse 7 hat. Dieses Koordinatensystem weist eine in Fahrzeug-Längsrichtung ausgerichtete x-Achse, eine in Fahrzeug-Querrichtung ausgerichtete y-Achse und eine in Fahrzeug-Hochrichtung ausgerichtete z-Achse auf.

Durch die vorgegebene Einbauposition des Umgebungssensors 6 am Fahrzeug 1 sind dessen Koordinaten (x2, y2, z2) der Sensor-Steuereinheit im fahrzeugseitigen Koordinatensystem bekannt. Entsprechend ist die Situation auch in der Heckansicht nach Figur 2 dargestellt.

Das Fahrzeug 1 ist in ein Messfeld 10 einer Prüfstation bei der Fahrzeugproduktion eingestellt. Die Prüfstation weist eine Prüfanlage mit einer (nicht dargestellten) steuerbaren Prüfeinrichtung auf. Der Prüfanlage bzw. dem Messfeld 10 ist ein ortsfestes kartesisches Koordinatensystem zugeordnet, mit einer in Messfeld-Längsrichtung ausgerichteten X-Achse, einer in Messfeld-Querrichtung ausgerichteten Y-Achse und einer in Messfeld-Hochrichtung bzw. in Vertikalrichtung ausgerichteten Z-Achse, die von einem Koordinatenursprung (X0, Y0, Z0) ausgehen. In der Prüfstation bzw. im Messfeld 10 ist ortsfest ein Zielobjekt 9 angeordnet, welches im Koordinatensystem des Messfelds 10 die Koordinaten (X2, Y2, Z2) und im fahrzeugeigenen Koordinatensystem die Koordinaten (x1, x1, z1) aufweist. Entsprechend weist der Koordinatenursprung des fahrzeugseitigen Koordinatensystems im Koordinatensystem des Messfelds 10 die Koordinaten (X1, Y1, Z1) auf.

Bei einem Kalibriervorgang für den Umgebungssensor 6 wird hier beispielhaft von der Prüfeinrichtung die Position (X1, Y1, Z1) des Koordinatenursprungs des fahrzeugseitigen Koordinatensystems relativ zur Position (X2, Y2, Z2) des Zielobjekts 9 hochgenau erfasst. Entsprechende Daten werden der Sensorik-Steuereinheit übermittelt, die damit auch in ihrem Koordinatensystem die genaue Position (x1, y1, z1) des Zielobjekts kennt. Da im fahrzeugseitigen Koordinatensystem auch die Position (x2, y2, z2) des Umgebungssensors vorliegt, kann damit die genaue Relativposition zwischen der Position (x1, y1, z1) des Zielobjekts 9 und der Position (x2, y2, z2) des Umgebungssensors 6 für eine Kalibrierung berechnet werden. Für weitere (nicht dargestellte) Referenzpunkte am Fahrzeug 1 und weitere Umgebungssensoren wird gegebenenfalls unter Verwendung weiterer Zielobjekte ebenso verfahren.

### Bezugszeichenliste

- 1: Fahrzeug
- 2: Frontseite
- 3: Heckseite
- 4: linke Fahrzeugseite
- 5: rechte Fahrzeugseite
- 6: Umgebungssensor
- 7: Vorderachse
- 8: Hinterachse
- 9: Zielobjekt
- 10: Messfeld
- X0, Y0, Z0: Koordinatensystem-Nullpunkt des Prüfeinrichtung-Koordinatensystems
- x0, y0, z0: Koordinatensystem-Nullpunkt des Fahrzeug-Koordinatensystems
- X1, Y1, Z1: Koordinatensystem-Nullpunkt des Fahrzeug-Koordinatensystems im Prüfeinrichtung-Koordinatensystem
- X2, Y2, Z2: Zielobjekt-Koordinaten im Prüfeinrichtung-Koordinatensystem
- x1, y1, z1: Zielobjekt-Koordinaten im Fahrzeug-Koordinatensystem
- x2, y2, z2: Sensor-Koordinaten im Fahrzeug-Koordinatensystem

## Patentansprüche

1. Kalibrierverfahren zur Kalibrierung wenigstens eines Umgebungssensors (6) einer Fahrzeug-Umgebungssensorik in der Fahrzeugproduktion,
mit den Verfahrensschritten:
ein Fahrzeug (1) mit dem wenigstens einen ortsfest am Fahrzeug (1) montierten Umgebungssensor (6) wird in ein Messfeld (10) einer Prüfstation eingestellt, wobei die Prüfstation eine Prüfanlage mit einer steuerbaren Prüfeinrichtung für die Erfassung der Relativposition zwischen dem wenigstens einen Umgebungssensor (6) und einem zugeordneten Zielobjekt (9) aufweist,
die Prüfeinrichtung sowie eine fahrzeugseitige Sensorik-Steuereinheit mit Kalibrierfunktion der fahrzeugseitigen Umgebungssensorik werden aktiviert,
**gekennzeichnet durch die Verfahrensschritte:**
die Prüfeinrichtung weist wenigstens ein ortsfestes Zielobjekt (9) im Messfeldraum und im Sichtfeld des wenigstens einen Umgebungssensors (6) auf, dessen genaue räumliche, ortsfeste Zielobjektposition (X2, Y2, Z2) als Referenzpunkt mit seinen Zielpositionsdaten in der Prüfeinrichtung gespeichert ist, und von der Prüfeinrichtung wird unmittelbar oder mittelbar die Relativposition zwischen der Zielobjektposition (X2, Y2, Z2) und der Position (x2, y2, z2) des wenigstens einen Umgebungssensors (6) als Vergleichs-Relativposition erfasst und daraus erstellte Kalibrier-Positionsdaten werden der Sensorik-Steuereinheit übermittelt,
zudem wird von der Umgebungssensorik mittels des wenigstens einen Umgebungssensors (6) und der Sensorik-Steuereinheit ebenfalls die Relativposition zwischen dem zugeordneten ortsfesten Zielobjekt (x1, y1, z1) und dem Umgebungssensor (x2, y2, z2) erfasst und entsprechend ermittelte Sensorik-Positionsdaten werden mit den übermittelten Kalibrier-Positionsdaten im Zuge der Kalibrierung in der Sensorik-Steuereinheit abgeglichen.

2. Kalibrierverfahren nach Anspruch 1, **dadurch gekennzeichnet, dass** die Vergleichs-Relativposition des wenigstens einen Umgebungssensors (6) zum Zielobjekt (9) und damit die Kalibrier-Positionsdaten mittelbar und indirekt dadurch erfasst werden,
dass die Prüfeinrichtung eine Referenzposition zwischen dem Zielobjekt (9) und wenigstens einem definierten, vom Umgebungssensor (6) beabstandeten Fahrzeugpunkt (X1, Y1, Z1) erfasst, und
dass die Vergleichs-Relativposition zwischen dem Zielobjekt (9) und dem Umgebungssensor (6) und damit die Kalibrier-Positionsdaten durch eine vektorielle Addition der ermittelten Referenzposition (X1, Y1, Z1) und einer durch die Einbauposition des Umgebungssensors (6) am Fahrzeug (1) der Sensorik-Steuereinheit bekannten, insbesondere abgespeicherten, Relativposition zwischen dem definierten Fahrzeugpunkt und dem Umgebungssensor (6) in der Sensorik-Steuereinheit und/oder in der Prüfeinrichtung berechnet werden.

3. Kalibrierverfahren nach Anspruch 2, **dadurch gekennzeichnet,**
**dass** der Prüfanlage ein ortsfestes Prüfanlagen-Koordinatensystem bei der Erfassung von Relativpositionen durch die Prüfeinrichtung mit einem Koordinaten-Nullpunkt (X0, Y0, Z0) zugeordnet ist,
**dass** dem Fahrzeug (1) ein fahrzeugfestes Fahrzeug-Koordinatensystem mit einem Koordinaten-Nullpunkt (x0, y0, z0) zugeordnet ist, und
**dass** die Prüfeinrichtung die Fahrzeugposition, insbesondere unter Einbeziehung wenigstens eines definierten Fahrzeugpunkts, dergestalt kalibriert, dass das Fahrzeug-Koordinatensystem im Prüfanlagen-Koordinatensystem abgebildet wird.

4. Kalibrierverfahren nach Anspruch 2, **dadurch gekennzeichnet, dass** mehrere definierte Fahrzeugpunkte mittels Positionssensoren gebildet sind, die an vorbestimmten Kalibrierstellen, insbesondere an mehreren Fahrzeugachsen (7, 8), aufgesteckt werden.

5. Kalibrierverfahren nach einem der vorhergehenden Ansprüche, **dadurch gekennzeichnet,**
**dass** ein oder mehrere Umgebungssensoren (6) als optische Sensoren oder LIDAR-Sensoren oder Radarsensoren oder Ultraschallsensoren am Fahrzeug (1) eingesetzt sind, gegebenenfalls für mehrere Umgebungssensoren (6) jeweils wenigstens ein zugeordnetes, ortsfestes Zielobjekt (9) im Messfeldraum und jeweiligen Sensorsichtfeld vorgesehen ist, und
**dass** das wenigstens eine Zielobjekt (9) als aktives Ziel mit Senderfunktion und/oder als inaktives Ziel mit Reflektorfunktion ausgebildet ist.

6. Kalibrierverfahren nach einem der vorhergehenden Ansprüche, **dadurch gekennzeichnet, dass** die Kommunikation zwischen der Prüfeinrichtung und der Sensorik-Steuereinheit, insbesondere zur Übermittlung von Kalibrier-Positionsdaten, drahtlos per Funk verläuft.

7. Prüfanlage zur Durchführung eines Kalibrierverfahrens nach einem der vorhergehenden Ansprüche, wobei die Prüfanlage wenigstens ein ortsfestes Zielobjekt (9) aufweist.

8. Fahrzeug (1), insbesondere Nutzfahrzeug, mit wenigstens einem ortsfest am Fahrzeug (1) montierten Umgebungssensor (6) und einer zugeordneten Sensorik-Steuereinheit mit Kalibrierfunktion zur Durchführung eines der Kalibrierverfahren nach den Ansprüchen 1 bis 6.
